# EUROPÄISCHE PATENTSCHRIFT

(11) **EP 1 743 806 B1**
(45) Veröffentlichungstag und Bekanntmachung des Hinweises auf die Patenterteilung: **13.10.2010**
(21) Anmeldenummer: 06014425.0
(22) Anmeldetag: 11.07.2006
(51) Int. Cl.: B60P 7/08, B60R 13/06

(54) **Vorrichtung zum Abdichten eines Raumes**
Device for sealing a space
Dispositif pour rendre un espace étanche

(30) Priorität: 13.07.2005 DE 202005011193 U
(43) Veröffentlichungstag der Anmeldung: 17.01.2007
(73) Patentinhaber: allsafe Jungfalk GmbH & Co. KG, 78234 Engen (DE)
(72) Erfinder: Fugel, Thomas, 78234 Engen (DE)
(74) Vertreter: Weiss, Peter

(56) Entgegenhaltungen:
- EP-A- 0 613 797
- DE-A1- 10 110 996
- DE-A1- 19 713 435
- US-A- 5 934 742

## Beschreibung

Die Erfindung betrifft eine Vorrichtung zum Abdichten einer Sicke in einer Fahrzeugwand, mit einem Profil und einem Dichtmittel.

### Stand der Technik

Insbesondere in Fahrzeugwänden werden heute Profile festgelegt, welche dem Halten von Ladungssicherungssystemen dienen. Hierzu weisen diese Profile üblicherweise Nuten auf, in denen die Ladungssicherungssysteme horizontal oder vertikal lageverändert werden können. Als Beispiele für Ladungssicherungssysteme wird auf die DE 203 06 549.2 und die DE 20 2004 003 670.3 verwiesen.

Damit die Profile jedoch nicht stören, sind sie in der Regel in die Fahrzeugwand integriert, d.h., in die Fahrzeugwand ist eine Sicke eingeformt, welche der Aufnahme des Profils dient. Hier werden allerdings Eckbereiche und Räume ausgebildet, in denen sich Schmutz ansammeln kann und sich Bakterien od. dgl. bilden können. Dies ist lebensmittelhygienisch sehr bedenklich, weshalb in der Regel die Fugen in den Übergängen zwischen Profil und Fahrzeugwand durch eine Silikonfuge abgedeckt werden. Silikonfugen sind jedoch schwierig aufzubringen, in der Regel unschön und erfüllen ihre Abdichtung nur mangelhaft. Ferner ist das Aufbringen der Silikonfuge aufwendig.

Beispielsweise zeigt die DE 101 10 996 A1 ein Profil für eine Ladegutsicherungsvorrichtung. Allerdings erfüllt das gezeigte Elemente keine Dichtfunktion.

### Aufgabe

Aufgabe der vorliegenden Erfindung ist es, eine Vorrichtung der o.g. Art zu schaffen, bei der auf einfache Art und Weise eine Abdichtung der Übergänge zwischen Profil und Sicke möglich ist.

### Lösung der Aufgabe

Zur Lösung dieser Aufgabe führt, dass zumindest in eine seitliche Wand des Profils eine Nut vorgesehen, und in diese ein Dichtstreifen eingesetzt ist.

Das heisst, es muss nicht nachträglich eine Silikonfuge aufgebracht werden, sondern der Dichtstreifen wird zusammen mit dem Profil in die Sicke eingesetzt und erfüllt dort nach dem Festlegen des Profils seine Dichtwirkung.

Bevorzugt wird als Dichtstreifen ein Silikonband verwendet, da sich dieses sehr gut zwischen Sicke und Profil einklemmen lässt. Ferner ist Silikon lebensmittelhygienisch unbedenklich.

In einem bevorzugten Ausführungsbeispiel soll die Nut querschnittlich halbkreis- bis überhalbkreisförmig ausgebildet sein. In letzterem Fall bedeutet dies eine verbesserte Halterung des Dichtstreifens in der Nut.

Die halbkreisförmige Ausgestaltung, der auch die Aussenkontur eines Stützstreifens am Dichtstreifen nachempfunden ist, erlaubt es, dass der Dichtstreifen in geringem Umfange in der Nut gedreht werden kann. Dies ermöglicht, dass ein sich zwischen Sicke und Wand des Profils befindender Stützstreifen einer Ungleichmässigkeit der Wand und/oder der Sicke anpassen kann. Dies geschieht automatisch beim Festlegen des Profils in der Sicke, da sich der Stützstreifen durch Drehen des Einsatzstreifens in der Nut den Anforderungen anpasst.

Verbessert wird dies noch dadurch, dass der Stützstreifen zumindest einseitig einen gewissen Abstand von der Wand des Profils einhält, so dass der Stützstreifen im Bereich dieses Abstandes kippen kann.

Bevorzugt verläuft die Wand des Profils schräg zu einer Aussenfläche, wobei sie in dieser Beziehung möglichst dem Wandverlauf der Sicke angepasst ist.

Wie oben erwähnt, dient das Profil der Festlegung von Ladungssicherungs elementen, weshalb das Profil entsprechende Führungsnuten aufweist .

Durch die vorliegende Erfindung ist eine Vorrichtung geschaffen worden, bei der auf einfache Art und Weise eine Abdichtung der Übergänge zwischen Profil und Sicke möglich ist.

### Figurenbeschreibung

Weltere Vortelle, Merkmale und Einzelheiten der Erfindung ergeben sich aus der nachfolgenden Beschreibung eines bevorzugten Ausführungsbeispiels sowie anhand der Zeichnung; diese zeigt in
Figur 1 einen teilweise dargestellten Querschnitt durch eine Fahrzeugwand mit in eine Sicke eingesetzter erfindungsgemässer Vorrichtung; und
Figur 2 eine vergrösserte Darstellung des eingekreisten Bereichs aus Figur 1.

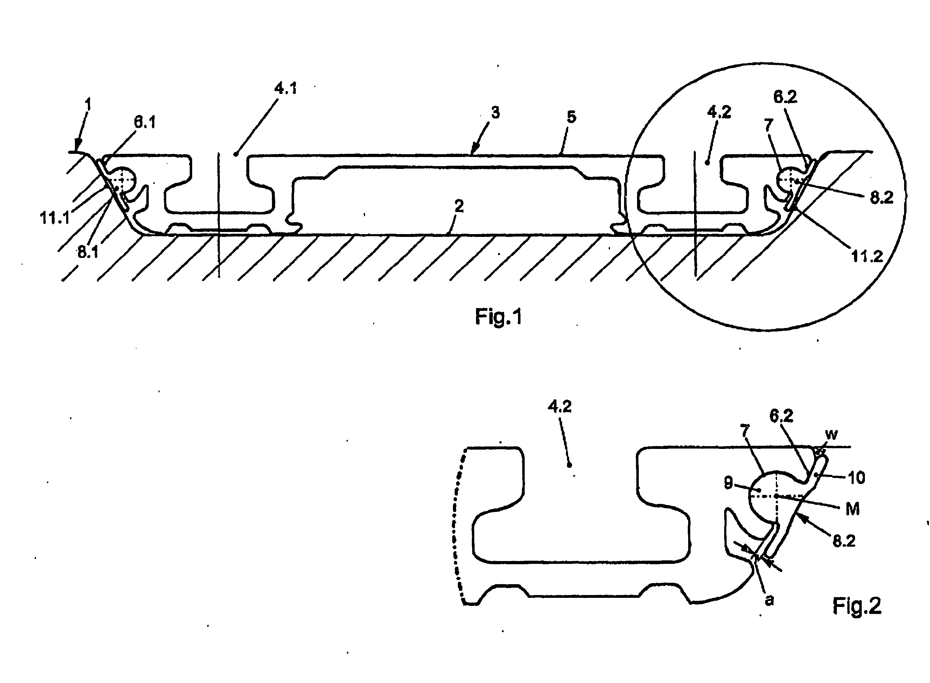

Gemäss Figur 1 befindet sich in einer Fahrzeugwand 1 eine Sicke 2, welche der Aufnahme eines Profils 3 dient Dieses Profil 3 hat die Aufgabe, Führungsnuten 4.1 und 4.2 für nicht näher gezeigte Ladungssicherungselemente anzubieten. Diese Ladungssicherungselemente, wie bspw. Querstangen, Teleskopstangen, Ladebalkenschuhe usw., können bspw. in der Vertikalen entlang den Führungsnuten verschoben und festgelegt werden.

Das Profil 3 besitzt eine Aussenfläche 5 und daran anschliessende seitliche Wände 6.1 und 6.2, welche mit der Aussenfläche 5, wie in Figur 2 gezeigt, einen spitzen Winkel w einschliessen.

In jede Wand 6.1 bzw. 6.2 ist eine Nut 7 eingeformt, welche querschnittlich halbkreisförmig bzw. überhalbkreisförmig ausgestaltet ist. Bei der überhaibkreisförmigen Ausgestaltung bildet die Nut 7 eine Hinterschneidung für einen Dichtstreifen 8 aus. Dieser Dichtstreifen 8 liegt mit einem Einsatzstreifen 9 in der Nut 7, wobei der Einsatzstreifen 9 eine Aussenkontur autweist, welche der Nut 7 nachempfunden ist. Hierdurch ist es möglich, dass der Einsatzstreifen 9 bzw. der Dichtstreifen 8 geringfügig in der Nut 7 um einen Mittelpunkt M drehen kann. Dies bewirkt ein Kippen eines Stückstreifens 10, wobei dieser Stückstreifen 10 zumindest einseitig einen Abstand a von der Wand 6.1 bzw. 6.2 einhält.

### Die Funktionsweise der vorliegenden Erfindung ist folgende:

Das Profil 3 soll in der Sicke 2 der Fahrzeugwand 1 festgelegt werden, wobei aus lebensmittelhygienischen Gründen der Raum in der Sicke 2 zwischen den beiden Dichtstreifen 8.1 und 8.2 abgedichtet werden soll. Hierzu wird das Profil 3 in die Sicke 2 eingesetzt, wobei sich die Dichtstreifen 8.1 und 8.2 mit ihren Stützstreifen 10 einer Sickenwand 11.1 bzw. 11.2 anpassen.

Festgelegt wird das Profil 3 durch entsprechende Schrauben in den Führungsnuten 4.1 und 4.2, wobei der Schraubverlauf nur strichpunktiert angedeutet ist. Dabei kann es zu einem gewissen Verzug des Profils 3 kommen, wobei dieser Verzug jedoch wieder durch ein Schwenken der Dichtstreifen 8.1 und 8.2 in den Nuten 7 ausgeglichen wird.

### Bezugszeichenliste

| | | | | | |
|---|---|---|---|---|---|
| 1 | Fahrzeugwand | 34 | | 67 | |
| 2 | Sicke | 35 | | 68 | |
| 3 | Profil | 36 | | 69 | |
| 4 | Führungsnut | 37 | | 70 | |
| 5 | Aussenfläche | 38 | | 71 | |
| 6 | Wand | 39 | | 72 | |
| 7 | Nut | 40 | | 73 | |
| 8 | Dichtstreifen | 41 | | 74 | |
| 9 | Einsatzstreifen | 42 | | 75 | |
| 10 | Stützstreifen | 43 | | 76 | |
| 11 | Sickenwand | 44 | | 77 | |
| 12 | | 45 | | 78 | |
| 13 | | 46 | | 79 | |
| 14 | | 47 | | | |
| 15 | | 48 | | a | Abstand |
| 16 | | 49 | | | |
| 17 | | 50 | | | |
| 18 | | 51 | | | |
| 19 | | 52 | | | |
| 20 | | 53 | | | |
| 21 | | 54 | | M | Mittelpunkt |
| 22 | | 55 | | | |
| 23 | | 56 | | | |
| 24 | | 57 | | | |
| 25 | | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | w | Winkel |
| 32 | | 65 | | | |
| 33 | | 66 | | | |

## Patentansprüche

1. Vorrichtung zum Abdichten einer Sicke (2) in einer Fahrzeugwand (1), mit einem Profil (3) und einem Dichtmittel (8.1, 8.2), wobei das Profil Führungsnuten (4.1, 4.2) zum festlegen von Ladungssicherungselementen aufweist, und wobei zumindest in einer seitlichen Wand (6.1, 6.2) des Profils (3) eine Nut (7) vorgesehen, und in diese ein Dichtstreifen (8.1, 8.2) eingesetzt ist.

2. Vorrichtung nach Anspruch 1, **dadurch gekennzeichnet, dass** der Dichtstreifen (8.1, 8.2) ein Silikonband ist.

3. Vorrichtung nach Anspruch 1 oder 2, **dadurch gekennzeichnet, dass** die Nut (7) querschnittlich über halbkreisförmig ausgebildet ist, wobei ein Einsatzstreifen (9) des Dichtstreifens (8.1, 8.2) dieser Form nachgebildet ist.

4. Vorrichtung nach einem der Ansprüche 1 bis 3, **dadurch gekennzeichnet, dass** der Dichtstreifen (8.1, 8.2) einen Stützstreifen (10) aufweist.

5. Vorrichtung nach Anspruch 4, **dadurch gekennzeichnet, dass** der Stützstreifen (10) zumindest teilweise einen Abstand (a) von der Wand (6.1, 6.2) des Profil (3) einhält.

6. Vorrichtung nach wenigstens einem der Ansprüche 1 bis 5, **dadurch gekennzeichnet, dass** die Wand (6.1, 6.2) schräg angestellt verläuft, so dass sie einen spitzen Winkel (w) mit einer Aussenfläche (5) des Profils (3) einschliesst.

## Claims

1. A device for sealing a depression (2) in a vehicle wall (1), having a shaped part (3) and a sealing means (8.1, 8.2), wherein the shaped part has guide grooves (4.1, 4.2) for securing load securing members and wherein a groove (7) is provided at least in one lateral wall (6.1, 6.2) of the shaped part (3) and a sealing strip (8.1, 8.2) is inserted into this groove (7).

2. A device according to claim 1, **characterised in that** the sealing strip (8.1, 8.2) is a silicone band.

3. A device according to claim 1 or 2, **characterised in that** the groove (7) is greater than semicircular in cross-section, wherein an insertion strip (9) of the sealing strip (8.1, 8.2) replicates this form.

4. A device according to any one of claims 1 to 3, **characterised in that** the sealing strip (8.1, 8.2) has a support strip (10).

5. A device according to claim 4, **characterised in that** the support strip (10) at least partly maintains a distance (a) from the wall (6.1, 6.2) of the shaped part (3).

6. A device according to at least one of claims 1 to 5, **characterised in that** the wall (6.1, 6.2) runs at an incline so that it forms an acute angle (w) with an outer surface (5) of the shaped part (3).

## Revendications

1. Dispositif pour rendre étanche une moulure (2) dans une paroi de véhicule (1), avec un profilé (3) et un moyen d'étanchéité (8.1, 8.2),
le profilé présentant des rainures de guidage (4.1, 4.2) destinées à la fixation d'éléments d'arrimage du chargement, et
dans au moins une paroi latérale (6.1, 6.2) du profilé (3) étant prévue une rainure (7) et dans cette dernière étant placée une bande d'étanchéité (8.1, 8.2).

2. Dispositif selon la revendication 1, **caractérisé par le fait que** la bande d'étanchéité (8.1, 8.2) est une bande de silicone.

3. Dispositif selon la revendication 1 ou 2, **caractérisé par le fait que** la rainure (7) est réalisée à section semi-circulaire, une bande d'insertion (9) de la bande d'étanchéité (8.1, 8.2) imitant cette forme.

4. Dispositif selon l'une des revendications 1 à 3, **caractérisé par le fait que** la bande d'étanchéité (8.1. 8.2) présente une bande d'appui (10).

5. Dispositif selon la revendication 4, **caractérisé par le fait que** la bande d'appui (10) maintient, au moins partiellement, une distance (a) par rapport à la paroi (6.1, 6.2) du profilé (3).

6. Dispositif selon au moins l'une des revendications 1 à 5, **caractérisé par le fait que** la paroi (6.1, 6.2) s'étend en oblique, de sorte qu'elle forme un angle aigu (w) avec une face extérieure (5) du profilé (3).
